Europäisches Patentamt

European Patent Office

Office européen des brevets

(11) Numéro de publication: **0 310 482**
A1

# (12) DEMANDE DE BREVET EUROPEEN

(21) Numéro de dépôt: 88402410.0

(22) Date de dépôt: 23.09.88

(51) Int. Cl.⁴: **A 46 B 17/08**

(30) Priorité: 28.09.87 FR 8712538

(43) Date de publication de la demande:
05.04.89 Bulletin 89/14

(84) Etats contractants désignés:
AT BE CH DE ES FR GB GR IT LI LU NL SE

(71) Demandeur: **Poitevin, Philippe**
**Les Grenets Dissay sous Courcillon**
**F-72500 Château du Loir (FR)**

(72) Inventeur: **Poitevin, Philippe**
**Les Grenets Dissay sous Courcillon**
**F-72500 Château du Loir (FR)**

(54) **Brosse dentaire anti-chocs.**

(57) La présente invention concerne un dispositif permettant le brossage énergique des dents et des gencives sans risque de chocs et de blessures occasionnées par l'embout en matière plastique dure des brosses à dents ordinaires.

Il comporte sur une brosse de forme classique en embout (1) de caoutchouc silicone souple de type alimentaire moulé dans une réservation ménagé à cet effet lors de l'injection du corps de la brosse.

La brosse comporte également sur ses côtés (2) un moulage d'unmême matériau souple anti-choc

Fig. 2

EP 0 310 482 A1

Description

## BROSSE DENTAIRE ANTI-CHOCS

La présente invention concerne une brosse principalement conçue pour les soins d'hygiène bucco-dentaire et appareils fragiles et comportant un dispositif permettant un brossage énergique, même des dents ayant une implantation irrégulière sans risques de chocs. De même un dispositif latéral supprime totalement les risques de coupures et d'égratignures de la gencive, inconvénients bien connus engendrés par les brosses traditionnelles réalisées à partir de matériaux plastiques thermo-fusibles durs injectés dans des moules polis ; le corps de la brosse ainsi obtenu présente alors des arêtes vives et souvent des bavures tranchantes, notamment au droit du plan de fermeture de l'empreinte. Lors du brossage quotidien des dents, il est fréquent de se choquer les dents ou appareils dentaires avec le bout de la brosse traditionnelle, d'ou risques importants de détérioration de l'émail des dents. Demême les côtés de la tête porte touffes depoils de la brosse provoquent souvent des écorchures de la gencive pendant le brossage de bas en haut.

dans l'utilisation quotidienne de la brosse dentaire traditionnelle, la volonté de l'utilisateur de réaliser un brossage efficace des dents et un nettoyagede la base de la gencive conduit ce dernier bien souvent à des chocs et égratignures, voire blessures contraire à une bonne hygiène bucco-dentaire.

Le but de la présente invention est de supprimer totalement les inconvénients précités et de réaliser une brosse dentaire comportant un dispositif amortisseur à son extrémité (1) et un dispositif protecteur sur les plans latéraux (2) de la tête recevant les touffes de poils, le dispositif selon l'invention consiste à transformer l'embout en matière plastique dure de la brosse traditionnelle ainsi que les plans latéraux (2) présentant souvent une arête vive, par une matière souple du type caoutchouc naturel ou synthétique mais suffisamment souple pour absorber les chocs, matière ne comportant pas de contre-indications en regard de l'aspect alimentaire de l'utilisation préférentielle.

Dans la présente réalisation le plan de fermeture de l'empreinte responsable de la bavure souvent coupante a été supprimée à l'endroit critique de la tête en faisant coïncider cette ligne et la réservation du bourrelet périphérique.

Pour la réalisation du surmoulage de matière souple une réservation a été réalisée au droit des endroits dangereux précités lors du moulage du corps de la brosse en matière plastique thermo-fusible

Il est donc proposé selon l'invention une brosse comportant une tête rigide et un nombre déterminé nécessaire de touffes de poils choisis en nylon pur, agrafés dans l'épaisseur de la tête de la brosse dont l'extrémité est destinée au brossage principalement des dents et au nettoyage des gencives. L'embout de la brosse ainsi que les deux côtés libres de l'emplacement de l'empoilage sont agrémentés de matière souple adhérente interdisant toutes atteintes notamment de la cavité buccale.; de préférence un élastomère silicone ou encore du latex.

La planche unique de croquis illustre l'invention, la figure 1 représente la vue de dessous de la brosse avec la limite d'implantation des touffes de poils et l'emprise de la matière souple. La figure 2 représente une vue de profil de la brosse avec la limite de l'embout en matière souple et le prolongement vers l'extrémité de la tête de la brosse au niveau du plan de moulage. La figure 3 représente la vue de dessus de la brosse avec la limite de l'emprise de l'embout en matière souple. La planche comporte également différentes coupes du corps de la brosse.

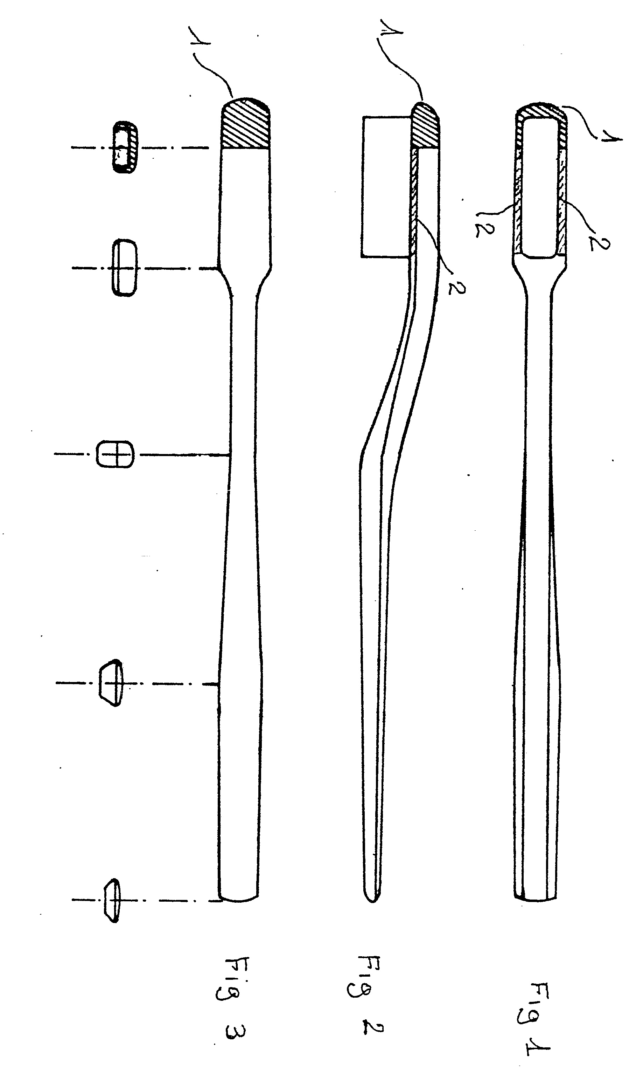

Le corps de la brosses est du type injecté au moulé sous pression à l'aide d'un matériau thermo-fusible transparent coloré dans la masse opaque ou translucide, l'injection est réalisée dans une empreinte usinée à cet effet et comportant outre le logement du corps de la brosse, une série de broches servant à réaliser le logement des touffes de poils de nylon ainsi que les barrettes ménageant les réservations destinés à recevoir le matériau souple.

Le matériau choisi pour le moulage du corps de la brosse est un polycarbonate réputé incassable et ayant peu de retrait au refroidissement. Un traitement des emplacements recevant le matériau souple est nécessaire, le choix de la technique a porté sur un traitement thermique à température élevée, ce traitement thermique présente les avantages suivants :
- supprime l'emploi de tous agents chimiques de renfort d'adhésivité tels que primaire ou colle etc..., lors de la mise en place du bourrelet protecteur en caoutchouc silicone, selon l'invention, le matériau souple doit être parfaitement adhérent car cette condition supprime l'introduction et la prolifération des bactéries entre le bourrelet et son support.
- Egalment, le traitement thermique a pour effet de libérer des contraintes et tensions de surface et facilite l'implantation des touffes de poils réalisée en force dans les logements réservés à cet effet lors du moulage du corps de la brosse.

Le matériau souple choisi pour former l'embout et le bourrelet périphérique est du type élastomère silicone alimentaire acétique monocmposant vulcanisable à froid à l'air ambiant de dureté shore A 30 à 40 diversement coloré. Toutefois tout autre matériau souple adhérent de type alimentaire peut convenir à réaliser le bourrelet anti-choc, anti-égratignure selon l'invention définie ci-dessus.

La mise en place "in situ" de l'élastomère silicone est réalisée à l'aide d'un coffrage spécialement étudié pour se clipser par sa propre élasticité sur le corps de la brosse à l'endroit des réservations. Il est réalisé à partir d'un matériau fusible, le polypropylène ayant la principale propriété d'être parfaitement anti-adhérent et supprimant de ce fait l'emploi d'agent de démoulage pouvant laisser subsister des traces non compatibles avec l'aspect alimentaire de l'invention, sur le corps de la brosse anti-choc, anti-égratignure.

Le matériau souple estmis en place par injection sous pression. Cette injection est réalisée en deux temps pour le complet remplissage du coffrage, la vulcanisation ultérieure du matériau souple s'effectuant à l'air ambiant.

## Revendications

- 1. Brosse à dents anti-chocs anti-égratignures, caractérisée en ce qu'elle comporte à l'extrémité de la tête porte soies (1) et sur ses deux côtés (2) une réservation recevant une matière souple de type alimentaire constituée par un élastomère silicone ou latex adhérent par ses propriétés au corps de la brosse.

- 2. Procédé de réalisation de la brosse à dents selon la revendication précédente, caractérisé en ce qu'il consiste à réaliser le corps de la brosse par moulage d'une matière plastique thermo-fusible notamment un polycarbonate, à faire subir un traitement thermique de surface aux endroits réservés (1) et (2) pour recevoir la matière souple.

- 3. Procédé selon la revendication 2, caractérisé en ce qu'il consiste à mettre en place à l'extrémité du porte soies un coffrage en matière plastique spécialement adapté à la tête de la brosse et ayant des propriétés anti-adhérente, destiné à l'injection de la matière souple.

- 4. Procédé selon la revendication 3, caractérisé en ce que le coffrage est maintenu en place par clipsage et comporte un ajutage pour l'injection sous pression de l'élastomère silicone ou autre matériau souple adhésif et compatible avec l'aspect alimentaire de la brosse.

- 5. Procédé selon la revendication 4, caractérisé en ce que l'injection du matériau souple est réalisée sous pression en deux temps pour le complet remplissage du coffrage, la vulcanisation ultérieure du matériau souple s'effectuant à l'air ambiant.

- 6. Procédé selon la revendication 2 caractérisé en ce qu'il consiste à réaliser une pluralité de logements dans l'épaisseur de la tête de la brosse destinés à recevoir les touffes de poils implantées d'une manière connue en soi.

- 7. Empreinte usinée pour la mise en oeuvre du procédé selon la revendication 2 ou 6 comportant le logement du corps de la brosse et une série de broches pour la réalisation de logements pour les touffes de poils et caractérisée en ce qu'elle comporte en outre des barrettes ménageant les réservations destinées à recevoir le matériau souple.

Fig 3

Fig 2

Fig 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A- 443 017 (PREVOST)<br>* Résumé; figures 1-3 *<br>--- | 1 | A 46 B 17/08 |
| A | DE-C- 260 612 (PREVOST)<br>* Revendications 1-3; figures 1-4 *<br>--- | 1 | |
| A | CH-A- 325 561 (BURSTENFABRIK WALTHER)<br>* Revendications 1,2;<br>sous-revendications; figures 1-12 *<br>----- | 1 | |

| | DOMAINES TECHNIQUES RECHERCHES (Int. Cl.4) |
|---|---|
| | A 46 B |

Le présent rapport a été établi pour toutes les revendications

| Lieu de la recherche | Date d'achèvement de la recherche | Examinateur |
|---|---|---|
| LA HAYE | 02-01-1989 | ERNST R.T. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03,82 (P0402)